# EUROPEAN PATENT APPLICATION

(11) **EP 4 797 394 A1**
(43) Date of publication of application: **26.08.2026**
(21) Application number: 25225661.5
(22) Date of filing: 19.12.2025
(51) Int. Cl.: H01M 50/103, H01M 50/342

(54) **SECONDARY BATTERY AND BATTERY PACK**

(30) Priority: 20.02.2025 KR 20250022331
(71) Applicant: SAMSUNG SDI CO., LTD., Yongin-si, Gyeonggi-do 17084 (KR)
(72) Inventor: KIM, Yong Chan, 16678 Suwon-si (KR); KIM, Chan Yeong, 16678 Suwon-si (KR); SHIN, Jae Sun, 16678 Suwon-si (KR); LEE, Sung Eun, 16678 Suwon-si (KR); LEE, Jae Young, 16678 Suwon-si (KR); OH, Jeong Won, 16678 Suwon-si (KR)
(74) Representative: Marks & Clerk LLP

(57) **Abstract**

A secondary battery includes a cell case including an electrode assembly, a vent hole in the cell case, and a safety vent coupled to the vent hole, the safety vent configured to rupture when internal pressure of the cell case is higher than a reference pressure, wherein the vent hole is in a bottom portion of the cell case, and the safety vent does not contact a bottom plate of the cell case when swelling occurs due to an increase in the internal pressure of the cell case.

## Description

### BACKGROUND

### 1. Field

The present disclosure relates to a secondary battery and a battery pack.

### 2. Description of the Related Art

Generally, with the recent rapid proliferation of electronic devices using batteries such as mobile phones, laptop computers, and electric vehicles, the demand for secondary batteries with high energy density and high capacity has been rapidly increasing. Accordingly, research and development for improving the performance of lithium secondary batteries are actively being conducted.

A lithium secondary battery is a battery including a positive electrode and a negative electrode including an active material capable of lithium-ion intercalation and deintercalation, and an electrolyte, and produces electric energy through oxidation and reduction reactions when lithium ions are intercalated or deintercalated from the positive electrode and the negative electrode.

The above information disclosed in this Background section is provided for enhancement of understanding of the background of the present disclosure, and, therefore, it may contain information that does not constitute related (or prior) art.

### SUMMARY OF THE DISCLOSURE

Embodiments include a secondary battery, including a cell case including an electrode assembly, a vent hole (formed) in the cell case, and a safety vent coupled to the vent hole, the safety vent configured to rupture (or ruptured) when internal pressure of the cell case is higher than a reference pressure, wherein the vent hole is (formed) in a bottom portion of the cell case, and the safety vent does not contact (or come into contact with) a bottom plate (of the cell case) when swelling occurs due to an increase in the internal pressure of the cell case.

The safety vent may be spaced (or formed inward) from an outer surface of the cell case (in a direction oriented inward from the outer surface of the cell case).

A plurality of notches may be (formed) in the safety vent.

The plurality of notches may become narrower from a bottom to a top of the safety vent.

The safety vent may be welded to an inner surface of the vent hole.

A step portion supporting a lower surface of the safety vent may be (formed) in the vent hole.

A thickness of the safety vent may equal a thickness of (or be the same as that of) the bottom portion, and the safety vent may include a notch groove portion spaced apart from the bottom plate.

The notch groove portion may include a plurality of notches configured to rupture (or ruptured) due to the internal pressure of the cell case, and a buffer portion that spaces (or maintains) the plurality of notches apart from the bottom plate (or formed so that the notches are spaced apart from the bottom plate).

The (plurality of) notches may narrow (or be formed to become narrower) from a bottom to atop of the safety vent and may have symmetrical shapes.

The (plurality of) notches may narrow (or be formed to become narrower) from the bottom to the top of the safety vent and may have asymmetrical shapes.

A thickness of the safety vent may be larger than a thickness of (or that of) the bottom portion, and the safety vent may include a notch groove portion spaced apart from the bottom plate.

The notch groove portion may include a plurality of notches configured to rupture (or ruptured) due to the internal pressure of the cell case and a buffer portion may maintain (or be formed so that) the (plurality of) notches (are) spaced apart from the bottom plate, and the buffer portion may be (formed to be) positioned higher than a thickness of the cell case.

A thickness of the safety vent may equal a thickness of (or be the same as that of) the bottom portion, and the cell case may include a support portion that maintains the safety vent spaced apart from the bottom plate (or formed so that the safety vent is spaced apart from the bottom plate).

The support portion may be a support rib (formed) on a bottom surface of the cell case.

Embodiments include a battery pack, including a housing, and a plurality of secondary batteries (disposed) in the housing, wherein the secondary battery includes a cell case including an electrode assembly, a vent hole (formed) in the cell case, and a safety vent coupled to the vent hole, the safety vent configured to rupture (or the safety vent being ruptured) when internal pressure of the cell case is higher than a reference pressure, the vent hole is (formed) in a bottom portion of the cell case, and the safety vent is spaced apart from a bottom plate of the housing to avoid contact (or so as not to come into contact) with the bottom plate when swelling occurs due to an increase in the internal pressure of the cell case.

A thickness of the safety vent may equal a thickness of the bottom portion, and the safety vent may include a notch groove portion spaced apart from the bottom portion (or bottom plate).

The notch groove portion may include a plurality of notches configured to rupture due to the internal pressure of the cell case, and a buffer portion that maintains the plurality of notches spaced apart from the bottom plate.

The bottom plate may include a spacer configured to space the cell case apart from the bottom plate.

The cell case may be (arranged) inside the housing in a first direction, and the spacer may be a support rib (formed) on the bottom plate, the support rib extending (or being formed to extend) in the first direction.

The cell case may be (arranged) inside the housing in a first direction, and the spacer may be a spacing groove (formed) on the bottom plate in the first direction, the spacing groove corresponding to (or formed to correspond to) the safety vent.

It will be appreciated that, where appropriate, any of the optional features described in relation to the first embodiments discussed above may be applied to the second embodiments discussed above.

At least some of the above and other features of the invention are set out in the claims.

### BRIEF DESCRIPTION OF THE DRAWINGS

Features will become apparent to those of ordinary skill in the art by describing in detail example embodiments with reference to the attached drawings, in which:
FIG. 1 is a perspective view schematically illustrating a configuration of a battery pack according to a first embodiment of the present disclosure;
FIG. 2 is a bottom perspective view schematically illustrating the configuration of the battery pack according to the first embodiment of the present disclosure;
FIG. 3 is a cross-sectional view taken along A-A of FIG. 1;
FIG. 4 is an exploded perspective view schematically illustrating the configuration of the battery pack according to the first embodiment of the present disclosure;
FIG. 5 is a perspective view schematically illustrating a configuration of a secondary battery according to the first embodiment of the present disclosure;
FIG. 6 is a cross-sectional view taken along B-B of FIG. 5;
FIG. 7 is a diagram schematically illustrating a configuration of an electrode assembly according to the first embodiment of the present disclosure;
FIG. 8 is a diagram schematically illustrating a configuration of a safety vent according to the first embodiment of the present disclosure;
FIG. 9 is a diagram schematically illustrating swelling of the safety vent according to the first embodiment of the present disclosure;
FIG. 10 is a diagram schematically illustrating a modified example of a vent hole according to the first embodiment of the present disclosure;
FIG. 11 is a diagram schematically illustrating a configuration of a safety vent according to a second embodiment of the present disclosure;
FIG. 12 is a diagram schematically illustrating swelling of the safety vent according to the second embodiment of the present disclosure;
FIG. 13 is a diagram schematically illustrating a first modified example of the safety vent according to the second embodiment of the present disclosure;
FIG. 14 is a diagram schematically illustrating a second modified example of the safety vent according to the second embodiment of the present disclosure;
FIG. 15 is a diagram schematically illustrating a third modified example of the safety vent according to the second embodiment of the present disclosure;
FIG. 16 is a diagram schematically illustrating a fourth modified example of the safety vent according to the second embodiment of the present disclosure;
FIG. 17 is a cross-sectional view schematically illustrating a configuration of a secondary battery according to a third embodiment of the present disclosure;
FIG. 18 is a perspective view schematically illustrating a configuration of a battery pack according to a fourth embodiment of the present disclosure;
FIG. 19 is a cross-sectional view schematically illustrating the configuration of the battery pack according to the fourth embodiment of the present disclosure; and
FIG. 20 is a cross-sectional view schematically illustrating a modified example of the battery pack according to the fourth embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

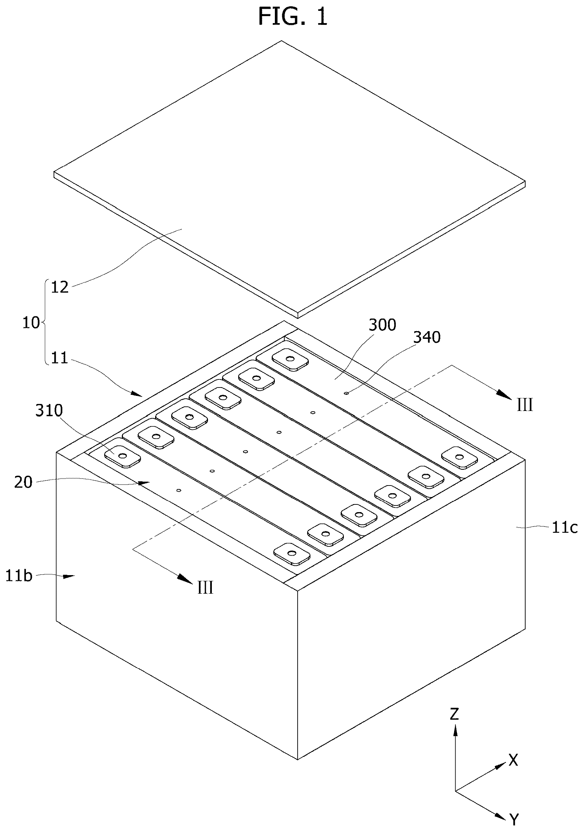

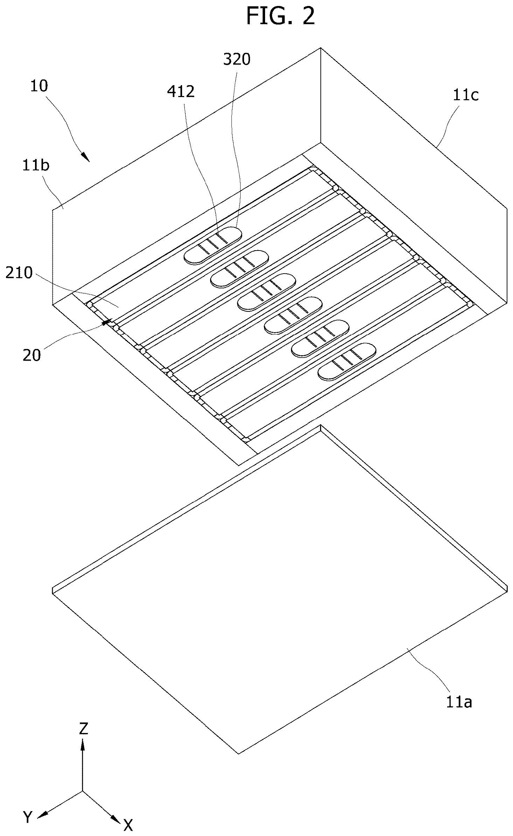

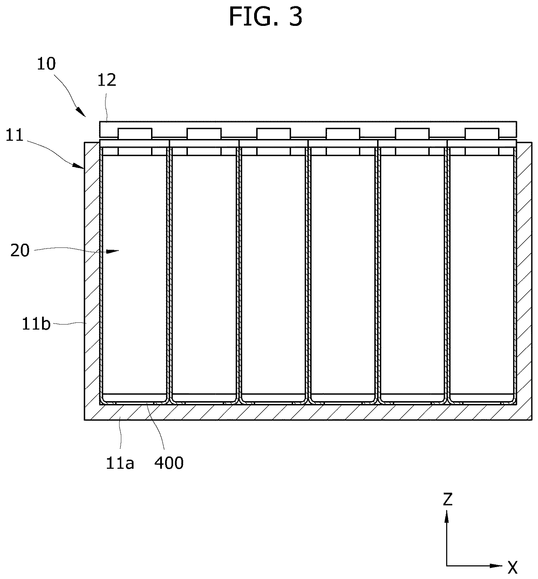

FIG. 1 is a perspective view schematically illustrating a configuration of a battery pack according to a first embodiment of the present disclosure, FIG. 2 is a bottom perspective view schematically illustrating the configuration of the battery pack according to the first embodiment of the present disclosure, and FIG. 3 is a cross-sectional view taken along A-A of FIG. 1, and is an exploded perspective view schematically illustrating the configuration of the battery pack according to the first embodiment of the present disclosure.

An example of a first direction to be described hereinafter may be a direction parallel to an X-axis in FIG. 1, an example of a second direction may be a direction parallel to a Y-axis in FIG. 1, and an example of a third direction may be a direction parallel to a Z-axis in FIG. 1.

Referring to FIGS. 1 to 4, the battery pack according to the present embodiment may include a housing 10 and a secondary battery 20.

The housing 10 may function as a component that supports the secondary battery 20 and protects the secondary battery 20 from external impact and foreign substances. The housing 10 may provide a space for accommodating the secondary battery 20 inside.

The housing 10 may include a housing body 11 and a housing cover 12.

The housing body 11 may be formed to have the shape of a box with a hollow interior and an open side. For example, the open side of the housing body 11 may be disposed to be directed upward in FIG. 1 (e.g., the Z-axis). A cross-sectional shape of the housing body 11 may be designed to be any shape such as a polygon, a circle, and an oval.

The housing body 11 according to the present embodiment may include a bottom plate 11a, an end plate 11b, and a side plate 11c.

The bottom plate 11a may form a bottom exterior of the housing body 11.

The bottom plate 11a according to the present embodiment may be formed to have a substantially flat shape. The bottom plate 11a may be disposed perpendicular to the third direction.

The end plate 11b may extend from the bottom plate 11a and form a portion of a side surface exterior of the housing body 11.

The end plate 11b according to the present embodiment may have the shape of a flat plate extending from the bottom plate 11a in a direction parallel to the third direction. A lower end of the end plate 11b may be connected to an edge of the bottom plate 11a disposed parallel to the second direction. The end plate 11b may be disposed perpendicular to the first direction.

A pair of the end plate 11b may be provided. The pair of the end plate 11b may be disposed to face each other in the first direction.

The side plate 11c may extend from the bottom plate 11a and form a remaining portion of the side surface exterior of the housing body 11.

The side plate 11c according to the present embodiment may have the shape of a flat plate extending from the bottom plate 11a in the direction parallel to the third direction. A lower end of the side plate 11c may be connected to an edge of the bottom plate 11a which is disposed parallel to the first direction. The side plate 11c may be disposed perpendicular to the second direction. A pair of the side plate 11c may be provided. The pair of the side plate 11c may be disposed to face each other in the second direction.

The housing cover 12 may be coupled to the housing body 11 to close an internal space of the housing body 11. For example, the housing cover 12 may be formed to have an approximate plate shape. The housing cover 12 may be disposed to face an upper surface of the housing body 11, that is, upper ends of the end plate 11b and the side plate 11c. The housing cover 12 may be fixed to the upper ends of the end plate 11b and the side plate 11c by using any of various coupling schemes such as bolting, welding, and fitting.

The secondary battery 20 may function as a unit structure that stores and supplies power in a battery module. The secondary battery 20 may be disposed inside the housing 10.

A plurality of the secondary battery 20 may be provided. The plurality of the secondary battery 20 may be disposed in a plurality of lines inside the housing 10. For example, the plurality of the secondary battery 20 may be disposed in a large number of lines inside the housing body 11 in the first direction. However, an arrangement form of the plurality of the secondary battery 20 can be disposed in a plurality of lines in the second direction inside the housing body 11 or in a plurality of lines in the first and second directions.

The plurality of the secondary battery 20 may be connected in series or in parallel by electrical connection means such as bus bars.

Hereinafter, an example in which the secondary battery 20 is a prismatic lithium- ion secondary battery will be described. However, the secondary battery may be, for example, a lithium polymer battery or a cylindrical battery.

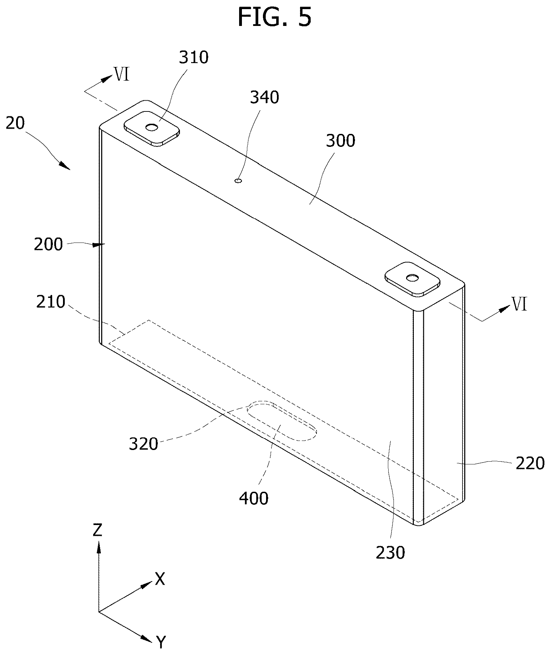

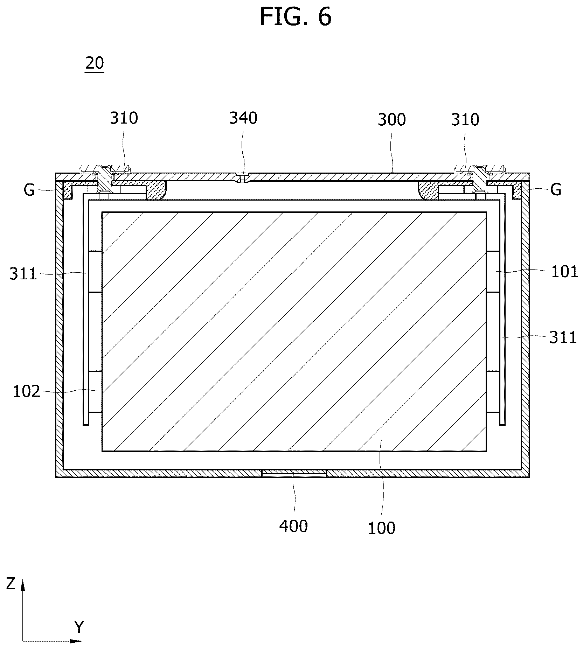

FIG. 5 is a perspective view schematically illustrating a configuration of the secondary battery according to the first embodiment of the present disclosure, and FIG. 6 is a cross-sectional view taken along B-B of FIG. 5.

Referring to FIGS. 1 to 6, the secondary battery 20 according to the present embodiment may include a cell case 200, a vent hole 320, and a safety vent 400.

An electrode assembly 100 is included inside the cell case 200.

The electrode assembly 100 may function as a unit structure that performs power charging and discharging operations in the secondary battery 20. The electrode assembly 100 may be accommodated inside the cell case 200.

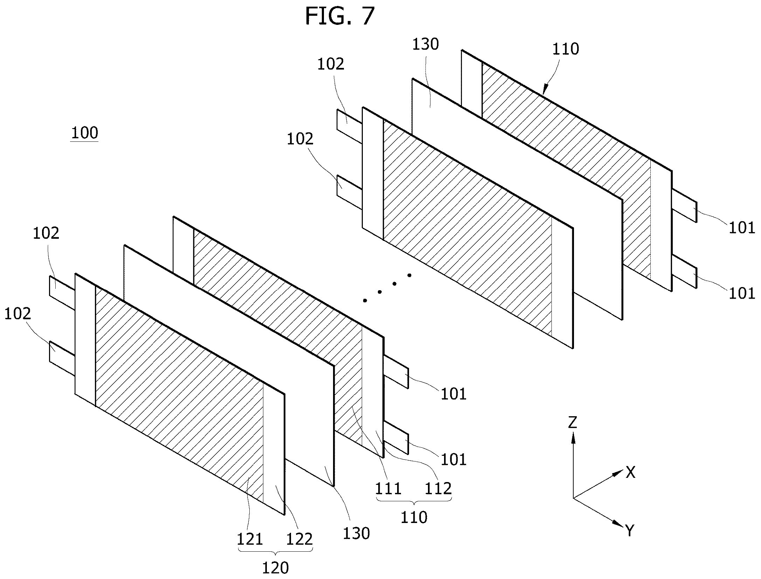

FIG. 7 is a diagram schematically illustrating a configuration of the electrode assembly according to the first embodiment of the present disclosure.

Referring to FIG. 7, the electrode assembly 100 according to the present embodiment may include a first electrode 110, a second electrode 120, and a separator 130.

Hereinafter, an example in which an electrode assembly 100 is formed in a stack type in which a plurality of the first electrode 110, the plurality of the second electrode 120, and a plurality of the separator 130 are alternately stacked in the first direction will be described. However, the electrode assembly 100 may also be formed in a roll type in which the first electrode 110, the second electrode 120, and the separator 130 are wound around a winding axis in a state in which the first electrode 110, the second electrode 120, and the separator 130 are sequentially stacked.

The first electrode 110 may function as a positive electrode of the electrode assembly 100.

The first electrode 110 according to the present embodiment may be formed to have the shape of a foil including a metal material such as aluminum or an aluminum alloy. Both surfaces of the first electrode 110 may be disposed perpendicular to the first direction. A type, size, shape, and the like of the first electrode 110 may vary, as long as the first electrode 110 does not cause a chemical change in the secondary battery 20 and is conductive. The shape of the first electrode 110 may be designed to be any shape, not just the rectangular shape shown.

A plurality of the first electrode 110 may be provided. The plurality of the first electrode 110 may be arranged in the first direction. The number of the first electrode 110 may be designed in various ways depending on a charging capacity or the like of the secondary battery 20.

The first electrode 110 may include a first active material layer 111.

The first active material layer 111 may be provided in a form in which at least a portion of the first electrode 110 is coated with the first active material layer 111. Both surfaces of the first electrode 110 may be coated with the first active material layer 111, or only one of the surfaces of the first electrode 110 may be coated with the first active material layer 111.

Since the first electrode 110 functions as the positive electrode in the present embodiment, the first active material layer 111 may include a positive electrode active material.

The positive electrode active material may be a compound capable of reversible lithium intercalation and deintercalation (a lithiated intercalation compound). More specifically, the positive electrode active material may be at least one of composite oxides of lithium and a metal selected from cobalt, manganese, nickel, iron, and combinations thereof.

For example, the positive electrode active material may include at least one of lithium-iron-phosphorus oxide (LiFePO4, LFP), lithium-manganese-iron-phosphorus oxide (LiMnFePO4, LMFP), and a lithium-nickel-cobalt-manganese oxide (LiNixCoyMnzO2, LNCM). Here, 0 < x < 1, 0 < y < 1, 0 < z < 1, x + y + z = 1 may be satisfied. The positive electrode active material may include only one of the lithium-iron-phosphorus oxide (LiFePO4, LFP), the lithium-manganese-iron-phosphorus oxide (LiMnFePO4, LMFP), and the lithium-nickel-cobalt-manganese oxide (LiNixCoyMnzO2, LNCM), or may include two or all of the lithium-iron-phosphorus oxide (LiFePO4, LFP), the lithium-manganese-iron-phosphorus oxide (LiMnFePO4, LMFP), and the lithium-nickel-cobalt-manganese oxide (LiNixCoyMnzO2, LNCM).

The first active material layer 111 may further include a positive electrode conductive material.

The positive electrode conductive material is used to impart conductivity to the first active material layer 111, and may be any material that does not cause a chemical change and is electronically conductive. Examples of the positive electrode conductive material may include carbon materials such as natural graphite, artificial graphite, carbon black, acetylene black, Ketjen black, carbon fibers, carbon nanofibers, and carbon nanotubes, metal materials in the form of a metal powder or metal fiber containing copper, nickel, aluminum, silver, or the like, conductive polymers such as polyphenylene derivatives, or mixtures thereof.

The first active material layer 111 may further include a positive electrode binder.

The positive electrode binder serves to firmly bind particles constituting a positive electrode active material to each other and also to firmly bind the positive electrode active material to the first electrode 110.

Examples of the positive electrode binder include a non-aqueous binder, an aqueous binder, a dry binder, or a combination thereof.

Examples of the non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamideimide, polyimide, and a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluoroelastomer, polyethylene oxide, polyvinylpyrrolidone, polyepichlorohydrin, polyphosphazene, poly(meth)acrylonitrile, ethylene propylene diene copolymer, polyvinylpyridine, chlorosulfonated polyethylene, latex, a polyester resin, a (meth)acrylic resin, a phenol resin, an epoxy resin, polyvinyl alcohol, and combinations thereof.

When the aqueous binder is used as the positive electrode binder, a cellulose compound capable of imparting viscosity may be further included. The cellulose compound may be a mixture of one or more kinds of carboxymethyl cellulose, hydroxypropyl methyl cellulose, methyl cellulose, an alkali metal salt thereof, and the like. The alkali metal may be Na, K, or Li.

The dry binder may be a polymer material capable of being fiberized and may be, for example, polytetrafluoroethylene, polyvinylidene fluoride, polyvinylidene fluoride-hexafluoropropylene copolymer, polyethylene oxide, or a combination thereof.

The first electrode 110 may include a first uncoated portion 112 that is not coated with the first active material layer 111. The first uncoated portion 112 according to the present embodiment may be disposed in one end region of the first electrode 110 in the second direction. However, the first uncoated portion 112 may also be formed over an entire edge region of the first electrode 110.

The second electrode 120 may function as a negative electrode of the electrode assembly 100.

The second electrode 120 according to the present embodiment may be formed to have the shape of a foil including a metal material such as copper, a copper alloy, nickel, or a nickel alloy. Both surfaces of the second electrode 120 may be disposed perpendicular to the first direction. A type, size, shape, or the like of the second electrode 120 may vary, as long as the second electrode 120 does not cause a chemical change in the secondary battery 20 and is conductive. A cross-sectional shape of the second electrode 120 may be designed to be any shape, in addition to the rectangular shape illustrated in FIG. 6.

A plurality of the second electrode 120 may be provided. The plurality of the second electrode 120 may be arranged in the first direction. The plurality of the first electrode 110 and the plurality of the second electrode 120 may be disposed alternately in the first direction.

The second electrode 120 may include a second active material layer 121 and a second uncoated portion 122.

The second active material layer 121 may be provided in a form in which at least a portion of the second electrode 120 is coated with the second active material layer 121. Both surfaces of the second electrode 120 may be coated with the second active material layer 121 or only one of the surfaces of the second electrode 120 may be coated with the second active material layer 121.

Since the second electrode 120 functions as the negative electrode, the second active material layer 121 may include a negative electrode active material.

The negative electrode active material may include a material capable of reversible lithium-ion intercalation/deintercalation, a lithium metal, an alloy of lithium metal, a material capable of lithium doping and de-doping, or a transition metal oxide.

The material capable of reversible lithium-ion intercalation/deintercalation may include a carbon negative electrode active material, such as crystalline carbon, amorphous carbon, or a combination thereof. Examples of the crystalline carbon may include graphite, such as natural graphite or artificial graphite in an amorphous, platelike, flake-like, spherical, or fiber-like form, and examples of the amorphous carbon may include soft carbon or hard carbon, mesophase pitch carbides, and calcined coke.

The alloy of lithium metal may be an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of lithium doping and de-doping may be a Si negative electrode active material or a Sn negative electrode active material. The Si negative electrode active material may be silicon, a silicon-carbon composite, SiOx (0<x<2), a Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn negative electrode active material may be Sn, SnO2, a Sn alloy, or a combination thereof.

The silicon-carbon composite may be a composite of silicon and amorphous carbon. According to an embodiment, the silicon-carbon composite may be in the form of silicon particles and amorphous carbon coated on surfaces of the silicon particles. For example, the silicon-carbon composite may include secondary particles (cores) obtained by assembling primary silicon particles, and amorphous carbon coating layers (shells) located on surfaces of the secondary particles. The amorphous carbon may also be located between the silicon primary particles, for example, so that the primary silicon particles may be coated with the amorphous carbon. The secondary particles may be dispersed and present in an amorphous carbon matrix.

The silicon-carbon composite may further include crystalline carbon. For example, the silicon-carbon composite may include a core including crystalline carbon and silicon particles, and an amorphous carbon coating layer located on a surface of the core.

The Si negative electrode active material or the Sn negative electrode active material may be used in combination with the carbon negative electrode active material.

The second active material layer 121 may further include a negative electrode conductive material and a negative electrode binder.

The negative electrode conductive material is used to impart conductivity to the second active material layer 121, and can be any material that does not cause a chemical change and is electronically conductive. Examples of the negative electrode conductive material may include carbon materials such as natural graphite, artificial graphite, carbon black, acetylene black, Ketjen black, carbon fibers, carbon nanofibers, and carbon nanotubes, metal materials in the form of a metal powder or metal fiber containing copper, nickel, aluminum, silver, or the like, conductive polymers such as polyphenylene derivatives, or mixtures thereof.

The negative electrode binder serves to firmly bind the particles constituting the negative electrode active material to each other and also to firmly bind the negative electrode active material to the second electrode 120.

Examples of the negative electrode binder include a non-aqueous binder, an aqueous binder, a dry binder, and a combination thereof.

The non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluoroelastomer, polyethylene oxide, polyvinylpyrrolidone, polyepichlorohydrin, polyphosphazene, poly(meth)acrylonitrile, ethylene propylene diene copolymer, polyvinylpyridine, chlorosulfonated polyethylene, latex, a polyester resin, a (meth)acrylic resin, a phenol resin, an epoxy resin, polyvinyl alcohol, and combinations thereof.

When the aqueous binder is used as the negative electrode binder, a cellulose compound capable of imparting viscosity may be further included. The cellulose compound may be a mixture of one or more kinds of carboxymethyl cellulose, hydroxypropyl methyl cellulose, methyl cellulose, an alkali metal salt thereof, and the like. The alkali metal may be Na, K, or Li.

The dry binder may be a polymer material capable of being fiberized and may be, for example, polytetrafluoroethylene, polyvinylidene fluoride, polyvinylidene fluoride-hexafluoropropylene copolymer, polyethylene oxide, or a combination thereof.

The second electrode 120 may include the second uncoated portion 122 that is not coated with the second active material layer 121. The second uncoated portion 122 according to the present embodiment may be disposed in an end region of the second electrode 120. However, the second uncoated portion 122 is not limited to this form, and may also be formed over an entire edge region of the second electrode 120.

The separator 130 may be disposed between the first electrode 110 and the second electrode 120. The separator 130 may function to prevent a short circuit between the first electrode 110 and the second electrode 120 while allowing lithium ions to move between the first electrode 110 and the second electrode 120. The separator 130 may be disposed to surround an entire surface region of the electrode assembly 100. This makes it possible for the separator 130 to prevent the first electrode 110 and the second electrode 120 from being directly exposed to the outside of the electrode assembly 100.

The separator 130 may be made of polyethylene, polypropylene, polyvinylidene fluoride, or a multilayer film including two or more layers of these materials, and may be a mixed multilayer film such as a two-layer separator including polyethylene and polypropylene, a three-layer separator including polyethylene, polypropylene, and polyethylene, or a three-layer separator including polypropylene, polyethylene, and polypropylene.

The separator 130 may include a porous substrate, and a coating layer including an organic material, an inorganic material, or a combination thereof located on one or both sides of the porous substrate.

The porous substrate may be a polymer film formed of any one polymer selected from polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, cyclic olefin copolymer, polyphenylene sulfide, polyethylene naphthalate, glass fiber, Teflon, and polytetrafluoroethylene, or a copolymer or mixture of two or more of the materials.

The organic material may include a polyvinylidene fluoride polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof, but may vary.

The organic material and the inorganic material may be mixed and present in one coating layer, or may be present in a form in which a coating layer including the organic material and a coating layer including the inorganic material are stacked.

The electrode assembly 100 according to the present embodiment may further include a first tab 101 and a second tab 102.

The first tab 101 may be connected to the first electrode 110.

The first tab 101 according to the present embodiment may have the shape of a foil extending in a direction parallel to the second direction from a first uncoated portion 112 of the first electrode 110. The first tab 101 may have a substantially rectangular shape. However, the first tab 101 may be designed in any shape.

The first tab 101 may be formed integrally with the first electrode 110. For example, the first tab 101 may be a remaining region of the first uncoated portion 112 that remains after a portion of the first uncoated portion 112 is cut or removed by notching processing or the like. In other embodiments, the first tab 101 may be manufactured separately from the first electrode 110 and then connected to the first uncoated portion 112 by welding or the like. The material of the first tab 101 may be the same as that of the first electrode 110.

A plurality of the first tab 101 may be provided. The plurality of the first tab 101 may individually extend from the first uncoated portion 112 of each of the plurality of the first electrode 110. Adjacent of the plurality of the first tab 101 may be disposed to face each other in the first direction. That is, the plurality of the first tab 101 may be disposed in the first direction. Adjacent of the plurality of the first tab 101 may be disposed parallel to each other. Adjacent of the plurality of the first tab 101 may be in contact with each other, and may be spaced apart from each other by a thickness of the separator 130.

The plurality of the first tab 101 may be provided in each first electrode 110. For example, a pair of the first tab 101 may be formed on each first electrode 110. The pair of the first tab 101 formed on each of the first electrode 110 may be arranged in the third direction.

The second tab 102 may be connected to the first electrode 110.

The second tab 102 according to the present embodiment may have the shape of a foil that extends in the direction parallel to the second direction from the second uncoated portion 122 of the second electrode 120. The directions in which the first tab 101 and the second tab 102 extend may be opposite to each other. The second tab 102 may have an approximately rectangular shape. However, the shape of the second tab 102 may be designed to be any shape.

The second tab 102 may be formed integrally with the second electrode 120. For example, the second tab 102 may be a remaining region of the second uncoated portion 122 that remains after a portion of the second uncoated portion 122 is cut or removed by notching processing or the like. In other embodiments, the second tab 102 may be manufactured separately from the second electrode 120 and then connected to the second uncoated portion 122 by welding or the like. The material of the second tab 102 may be the same as that of the second electrode 120.

A plurality of the second tab 102 may be provided. Each of the plurality of the second tab 102 may individually extend from the plurality of the second uncoated portion 122 of different of the second electrode 120. Adjacent of the plurality of the second tab 102 may be disposed to face each other in the first direction. That is, the plurality of the second tab 102 may be arranged in the first direction. Adjacent of the plurality of the second tab 102 may be disposed parallel to each other. Adjacent of the plurality of the second tab 102 may be in contact with each other, and may be spaced apart by the thickness of the separator 130.

A plurality of the second tab 102 may be provided in each second electrode 120. For example, a pair of the second tab 102 may be formed in each of the second electrode 120. The plurality of the second tab 102 in the pair formed in each second electrode 120 may be arranged in the third direction.

The cell case 200 may form a schematic exterior of the secondary battery 20 and may accommodate the electrode assembly 100. The cell case 200 may include a conductive metal material such as aluminum, an aluminum alloy, or nickel-plated steel.

The cell case 200 according to the present embodiment may include a bottom portion 210, a back surface portion 220, and a side surface portion 230.

The bottom portion 210 may form a bottom exterior of the cell case 200. The bottom portion 210 according to the present embodiment may have the shape of a rectangular plate. The bottom portion 210 may be disposed to face the bottom plate 11a of the housing body 11. The bottom portion 210 may be disposed to face the bottom plate 11a in the third direction.

The back surface portion 220 may extend from the bottom portion 210 and form a portion of the side surface exterior of the cell case 200.

The back surface portion 220 according to the present embodiment may have the shape of a rectangular plate extending in the direction parallel to the third direction from the bottom portion 210. A lower end of the back surface portion 220 may be connected to an edge of the bottom portion 210 disposed parallel to the second direction. The back surface portion 220 may be disposed perpendicular to the first direction. An end of the back surface portion 220 may be disposed to face the housing cover 12.

A pair of the back surface portion 220 may be provided. The pair of the back surface portion 220 may be disposed to face each other at a predetermined interval in the first direction. The pair of the back surface portion 220 may be disposed parallel to each other. Each of the pair of the back surface portion 220 may be disposed to face inner surfaces of different of the end plate 11b inside the housing body 11.

The side surface portion 230 may extend from the bottom portion 210 and form a remaining portion of the side surface exterior of the cell case 200.

The side surface portion 230 according to the present embodiment may have the shape of a rectangular plate extending from the bottom portion 210 in the direction parallel to the third direction. A lower end of the side surface portion 230 may be connected to the edge of the bottom portion 210 disposed parallel to the first direction. The side surface portion 230 may be disposed to intersect the back surface portion 220. For example, the side surface portion 230 may be disposed perpendicular to the second direction. An end of the side surface portion 230 may be disposed to face the housing cover 12. An area of the side surface portion 230 may be smaller than that of the back surface portion 220.

A pair of the side surface portion 230 may be provided. The pair of the side surface portion 230 may be disposed to face each other at a predetermined interval in the second direction. The pair of the side surface portion 230 may be disposed parallel to each other. Each of the pair of the side surface portion 230 may be disposed to face inner surfaces of different of the side plate 11c inside the housing body 11.

Accordingly, the cell case 200 according to the present embodiment may be formed to have the shape of a rectangular parallelepiped with an upper open end facing the housing cover 12.

A cap plate 300 is included on the cell case 200.

The cap plate 300 may be coupled to the cell case 200 to seal the cell case 200.

The cap plate 300 according to the present embodiment may be formed to have the shape of a flat plate. The cap plate 300 may be disposed to face the cell case 200 in the third direction. For example, the cap plate 300 may be disposed to face an upper open surface of the cell case 200. The cap plate 300 may be disposed parallel to the bottom portion 210 of the cell case 200.

The cap plate 300 may be seated on upper ends of the back surface portion 220 and the side surface portion 230. In other embodiments, the cap plate 300 may be inserted into the cell case 200, and a circumferential surface of the cap plate 300 may be in contact with inner surfaces of the back surface portion 220 and the side surface portion 230. The cap plate 300 may be coupled to the upper ends of the back surface portion 220 and the side surface portion 230 by using any of various coupling schemes, such as welding, bolting, and fitting.

The cap plate 300 may include terminals 310 that are electrically connected to the electrode assembly 100.

The terminals 310 may pass through the cap plate 300 in the third direction. Upper ends of the terminals 310 may protrude outward from the cap plate 300, and lower ends of the terminals 310 may protrude into the cell case 200. Specific shapes of the terminals 310 can be other than the shapes illustrated in FIGS. 1 to 7 and the terminals 310 may be designed in any shape.

The terminals 310 may be formed of an electrically conductive material such as aluminum, nickel, or copper.

A pair of the terminals 310 may be provided. The terminals 310 in the pair may be disposed a predetermined interval apart from each other on the cap plate 300 in the second direction.

The terminals 310 may be electrically connected by current collectors 311. The terminals 310 in the pair may be individually connected to the first electrode 110 and the second electrode 120 of the electrode assembly 100. Accordingly, the terminals 310 in the pair may function as a positive terminal and a negative terminal of the secondary battery 20.

For example, one of the terminals 310 in the pair may be connected to the current collectors 311 connected to the first tab 101. Further, the other of the terminals 310 in the pair may be connected to the current collectors 311 connected to the second tab 102. However, the terminals 310 in the pair can be directly connected to the first tab 101 and the second tab 102.

An insulator G may be installed between the electrode assembly 100 and the cap plate 300. A pair of the insulator G may be provided. The pair of the insulator G may be spaced apart from each other in the second direction between the electrode assembly 100 and the cap plate 300. The pair of the insulator G may be disposed to individually surround the different terminals 310. The pair of the insulator G may be formed of an insulating material such as polyethylene (PE), polypropylene (PP), polyethylene terephthalate (PET), or rubber.

The cap plate 300 may further include an electrolyte injection port 340 in which a sealing plug may be installed.

The bottom portion 210 may include the vent hole 320 and the safety vent 400.

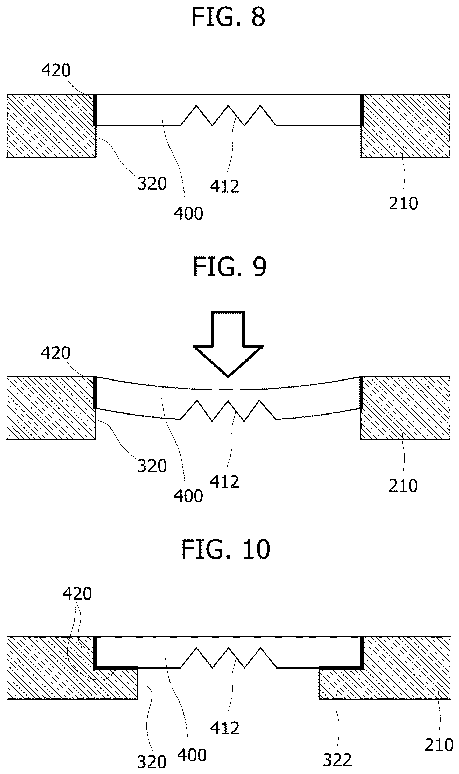

FIG. 8 is a diagram schematically illustrating a configuration of a safety vent according to the first embodiment of the present disclosure, and FIG. 9 is a diagram schematically illustrating swelling of the safety vent according to the first embodiment of the present disclosure.

Referring to FIGS. 1 to 9, the vent hole 320 may be formed to have the shape of a hole (e.g., an oval) passing through the bottom portion 210 in the third direction. The vent hole 320 may function as a component that provides a path along which flames, gas, smoke, or the like generated inside the cell case 200 is discharged from the secondary battery 20 when thermal runaway occurs in the secondary battery 20. A lower side of the vent hole 320 may be connected to an internal space of the cell case 200. An upper side of the vent hole 320 may be connected to an external space of the bottom portion 210. A cross-sectional shape of the vent hole 320 may be designed to be any shape such as an oval, a circle, or a polygon.

The safety vent 400 may be opened and closed depending on a change in internal pressure of the cell case 200. That is, the safety vent 400 may be kept in a closed state to seal the cell case 200 during normal operation of the secondary battery 20. The safety vent 400 may open when the internal pressure of the cell case 200 increases to a set level or higher due to overcharging or fire of the secondary battery 20, and discharge flames, gas, smoke, or the like generated inside the cell case 200 to the outside of the cell case 200.

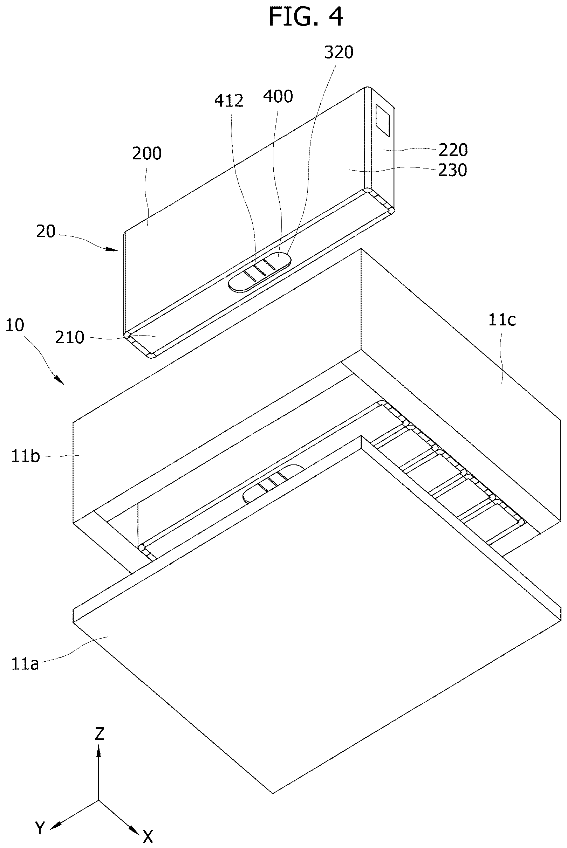

The safety vent 400 according to the present embodiment may be formed to have a flat shape. The safety vent 400 may be disposed to face the vent hole 320 in the third direction. The thickness of the safety vent 400 (e.g., along the Z-axis) may be smaller than that of the bottom portion 210. An area of the safety vent 400 may be formed to be larger than a cross-sectional area of the vent hole 320 (e.g., see FIG. 4). The safety vent 400 may be coupled to the vent hole 320 of the bottom portion 210 by using any of various coupling schemes such as welding, bolting, and fitting.

The safety vent 400 is formed inward from an outer surface of the cell case 200 (e.g., the safety vent 400 may be spaced apart from the outer surface of the cell case 200 in a direction oriented inward from the outer surface of the cell case 200 (e.g., in the Z-axis), making it possible to prevent the safety vent 400 from coming into contact with the bottom plate 11a of the housing when swelling occurs due to an increase in the internal pressure of the cell case 200.

In the safety vent 400, a notch 412 for inducing a rupture operation of the safety vent 400 may be formed. The notch 412 according to the present embodiment may have the shape of a groove that is concavely recessed from an outer surface of the safety vent 400 to an inner side of the safety vent 400.

More specifically, the notch 412 may be formed to become narrower from the bottom to the top of the safety vent 400.

The shape of the notch 412 may be other than the shapes illustrated in FIGS. 8 and 9, and the notch 412 may be formed in any pattern on the safety vent 400.

The safety vent 400 is formed to have a smaller thickness than the bottom portion 210 of the cell case 200, is formed on the inner side of the vent hole 320 by welding, and is disposed apart from the bottom plate 11a, making it possible to prevent a welded portion 420 of the safety vent 400 from being lifted and to prevent the safety vent 400 from coming into contact with the bottom plate 11a and being ruptured when swelling occurs due to a gas generated during a high temperature prevention process as illustrated in FIG. 9.

FIG. 10 is a modified example of the vent hole 320 according to the first embodiment of the present disclosure.

Referring to FIG. 10, a step portion 322 that supports a lower surface of the safety vent 400 may be formed in the vent hole 320 according to the present embodiment. The safety vent 400 is supported by the step portion 322 so that the safety vent 400 can be disposed apart from the bottom plate 11a, and an area of the welded portion 420 can be increased such that a lifting phenomenon of the welded portion 420 can be suppressed.

Hereinafter, the safety vent 400 according to the second embodiment of the present disclosure will be described.

The safety vent 400 according to the present embodiment may be configured differently from the safety vent 400 according to the first embodiment of the present disclosure only in a detailed configuration.

Accordingly, only the detailed configuration of the safety vent 400 according to the present embodiment different from the safety vent 400 according to the first embodiment of the present disclosure will be described.

For a remaining configuration of the secondary battery 20 according to the present embodiment, the description of the secondary battery 20 according to the first embodiment of the present disclosure may be applied as it is.

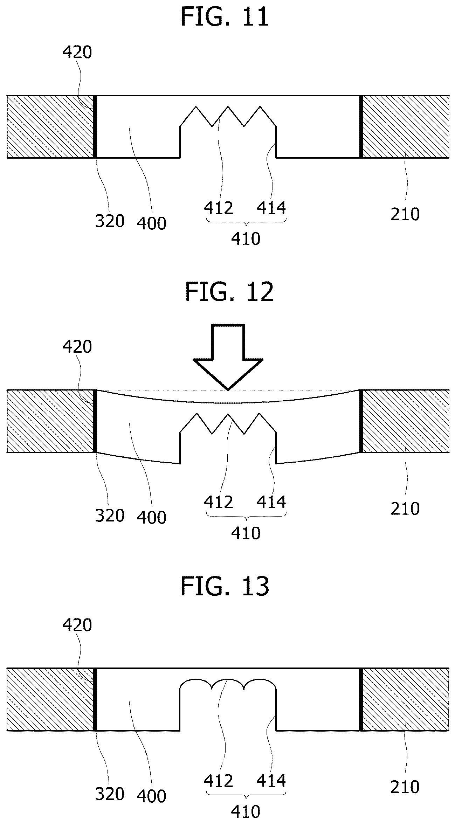

FIG. 11 is a diagram schematically illustrating a configuration of the safety vent according to the second embodiment of the present disclosure, and FIG. 12 is a diagram schematically illustrating swelling of the safety vent according to the second embodiment of the present disclosure.

Referring to FIGS. 1 to 12, the safety vent 400 according to the present embodiment may be disposed apart from the bottom plate 11a so that the safety vent 400 is prevented from coming into contact with the bottom plate 11a when swelling occurs due to an increase in the internal pressure of the cell case 200.

The safety vent 400 is formed to have the same thickness as the bottom portion 210 of the cell case 200, and the safety vent 400 may include a notch groove portion 410 spaced apart from the bottom plate 11a.

That is, the safety vent 400 may be formed to have the same thickness as the bottom portion 210 of the cell case 200 so that the welded portion 420 can be formed to be wide, and the notch groove portion 410 can prevent the safety vent 400 from being damaged due to contact with the bottom plate 11a at the time of swelling.

Further, since the area of the welded portion 420 increases, it is possible to prevent defects such as buckling, stress concentration, and wrinkles from occurring due to a change in the safety vent 400.

The notch groove portion 410 may include a plurality of the notch 412 that are ruptured due to the internal pressure of the cell case 200, and a buffer portion 414 formed so that the plurality of the notch 412 are spaced apart from the bottom plate 11a.

Each of the plurality of the notch 412 are configured to induce a rupture operation of the safety vent 400, and may have the shapes of grooves that are formed to be concave from the outer surface of the safety vent 400 to the inner side of the safety vent 400. More specifically, each of the plurality of the notch 412 may be formed to become narrower from the bottom to the top of the safety vent 400.

Since the plurality of the notch 412 are formed as triangles with both symmetrical sides, the internal pressure is uniformly distributed such that all the rupture points experience the same pressure, allowing uniform rupture and enabling a constant pressure design through easy prediction of rupture pressure.

The buffer portion 414 may be formed as a space that spaces the notch 412 apart from the bottom plate 11a. A portion of the safety vent 400 where the plurality of the notch 412 are formed is spaced apart from the bottom plate 11a by the buffer portion 414, making it possible to prevent the portion of the safety vent 400 where the plurality of the notch 412 are formed from coming into contact with the bottom plate 11a when swelling occurs due to a gas generated during a high temperature prevention process as illustrated in FIG. 12.

In particular, the thickness of the safety vent 400 according to the second embodiment of the present disclosure is the same as that of the bottom portion 210 such that the welded portion 420 can be formed to be wide, making it possible to suppress a lifting phenomenon of the welded portion 420 and to prevent defects such as buckling, stress concentration, and wrinkles from occurring due to a change in the safety vent 400.

FIG. 13 is a diagram schematically illustrating a first modified example of the safety vent 400 according to the second embodiment of the present disclosure.

Referring to FIG. 13, the plurality of the notch 412 that are ruptured due to the internal pressure of the cell case 200 may be formed in a semicircular shape that is convex upward. In other words, the plurality of the notch 412 may be formed in a symmetrical shape. Accordingly, the internal pressure is uniformly distributed such that all the rupture points experience the same pressure, allowing uniform rupture and enabling a constant pressure design through easy prediction of rupture pressure.

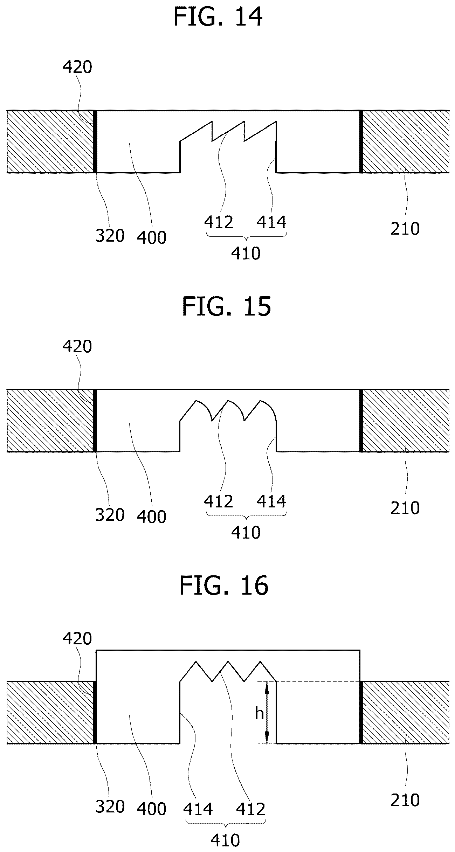

FIG. 14 is a diagram schematically illustrating a second modified example of the safety vent 400 according to the second embodiment of the present disclosure, and FIG. 15 is a diagram schematically illustrating a third modified example of the safety vent 400 according to the second embodiment of the present disclosure.

Referring to FIGS. 13 and 14, the plurality of the notch 412 that are ruptured due to the internal pressure of the cell case 200 may be formed in asymmetrical shapes.

That is, the plurality of the notch 412 may be formed in asymmetrical shapes, such as triangles with both asymmetrical sides (see FIG. 13) or shapes with one straight side and one curved side (see FIG. 14).

This can induce local rupture of the plurality of the notch 412, allowing rupture of the entire structure to occur more quickly, and induce a rupture path or allow a rupture order to be adjusted according to pressure. Further, a specific portion may be ruptured first such that the internal pressure can be adjusted to be lowered slowly and a sudden explosion can be prevented.

FIG. 16 is a diagram schematically illustrating a fourth modified example of the safety vent 400 according to the second embodiment of the present disclosure.

Referring to FIG. 16, the thickness of the safety vent 400 may be larger than that of the bottom portion 210, and the safety vent 400 may include a notch groove portion 410 spaced apart from the bottom plate 11a.

The notch groove portion 410 may include a plurality of the notch 412 that are ruptured due to the internal pressure of the cell case 200 and a buffer portion 414 formed so that the plurality of the notch 412 are spaced apart from the bottom plate 11a.

According to the present embodiment, the safety vent 400 is formed to have a large thickness so that the welded portion 420 is formed to be wide and the deformation of the safety vent 400 is minimized due to such a thickness, making it possible to suppress a lifting phenomenon of the welded portion 420 and to prevent defects such as buckling, stress concentration, and wrinkles from occurring due to a change in the safety vent 400.

In order to prevent the role of the plurality of the notch 412 from being reduced due to an increase in the thickness of the safety vent 400, a height h of the buffer portion 414 preferably corresponds to (e.g., is the same as) a height of the bottom portion 210.

Hereinafter, a secondary battery 20 according to a third embodiment of the present disclosure will be described.

The secondary battery 20 according to the present embodiment may be configured differently from the secondary battery 20 according to the first embodiment of the present disclosure only in a detailed configuration of the cell case 200.

Accordingly, only the detailed configuration of the cell case 200 different from that of the secondary battery 20 according to the first embodiment of the present disclosure will be described when the secondary battery 20 according to the present embodiment is described.

For a remaining configuration of the secondary battery 20 according to the present embodiment, the description of the secondary battery 20 according to the first embodiment of the present disclosure may be applied as it is.

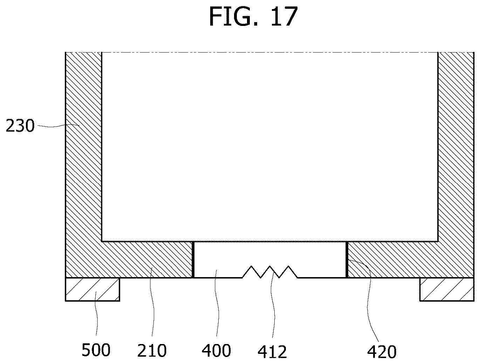

FIG. 17 is a cross-sectional view schematically illustrating a configuration of the secondary battery 20 according to the third embodiment of the present disclosure.

The secondary battery 20 according to the third embodiment of the present disclosure may include a support portion 500 so that the safety vent 400 formed on the bottom portion 210 of the cell case 200 may be spaced apart from the bottom plate 11a.

The support portion 500 may be formed on a bottom surface of the cell case 200. The support portion 500 may be formed as a support rib formed on a bottom surface on both sides of the bottom portion 210 of the cell case 200.

In the present embodiment, the support portion 500 formed as the support rib is illustrated as being formed on both sides of the bottom portion 210 of the cell case 200, but various design modifications can be adopted within the technical spirit of spacing the bottom portion 210 of the cell case 200 apart from the bottom plate 11a. For example, the support portion 500 may be formed to protrude along the edge of the bottom portion 210 of the cell case 200, a plurality of the support portion 500 may be formed, the support portion 500 may be separately coupled to the bottom portion 210 of the cell case 200, or the support portion 500 may be formed integrally with the cell case 200.

The safety vent 400 formed in the bottom portion 210 of the cell case 200 may be spaced apart from the bottom plate 11a by the support portion 500, making it possible to prevent the safety vent 400 from coming into contact with the bottom plate 11a of the housing when swelling occurs due to an increase in the internal pressure of the cell case 200.

Hereinafter, a battery pack according to a fourth embodiment of the present disclosure will be described.

The battery pack according to the present embodiment may be configured differently from the battery pack according to the first embodiment of the present disclosure only in the housing 10, which is a detailed configuration.

Accordingly, only the detailed configuration of the housing 10 different from that of the battery pack according to the first embodiment of the present disclosure will be described when the battery pack according to the present embodiment is described.

For a remaining configuration of the battery pack according to the present embodiment, the description of the battery pack according to the first embodiment of the present disclosure may be applied as it is.

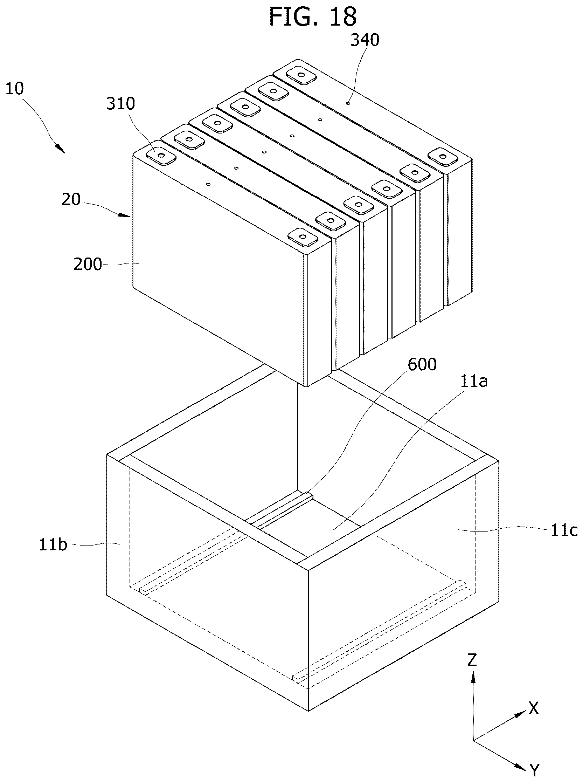

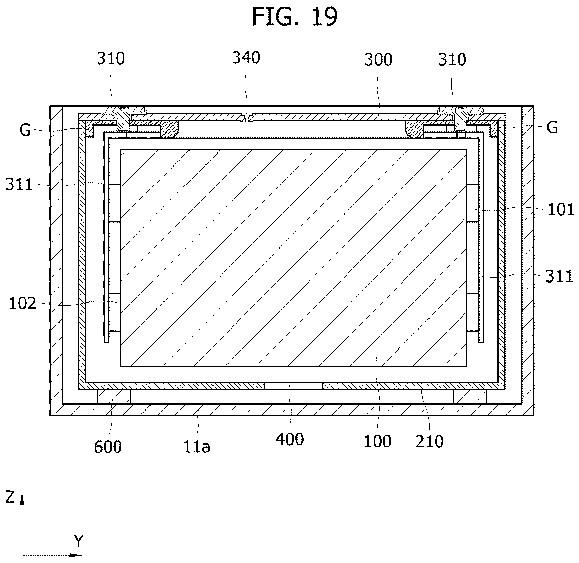

FIG. 18 is a perspective view schematically illustrating a configuration of the battery pack according to the fourth embodiment of the present disclosure, and FIG. 19 is a cross-sectional view schematically illustrating the configuration of the battery pack according to the fourth embodiment of the present disclosure.

Referring to FIGS. 18 and 19, the battery pack according to the present embodiment may include a housing 10 and a secondary battery 20, the secondary battery 20 may include a cell case 200, a vent hole 320, and a safety vent 400 formed in the vent hole 320, the vent hole 320 may be formed in a bottom portion 210 of the cell case 200, and the safety vent 400 may be spaced apart from a bottom plate 11a so as not to come into contact with the bottom plate 11a of the housing 10 when swelling occurs due to an increase in internal pressure of the cell case 200.

The bottom plate 11a may include a spacer 600 that spaces the cell case 200 apart from the bottom plate 11a.

That is, a configuration that spaces the safety vent 400 included in the bottom portion 210 of the cell case 200 apart from the bottom plate 11a to prevent the safety vent 400 from coming into contact with the bottom plate 11a at the time of swelling can be achieved by the spacer 600 formed on the bottom plate 11a.

The cell case 200 may be arranged inside the housing 10 in the first direction, and the spacer 600 may be formed as a support rib that is formed on the bottom plate 11a and formed to extend in the first direction.

The safety vent 400 formed in the bottom portion 210 of the cell case 200 may be spaced apart from the bottom plate 11a of the housing 10 by the spacer 600 formed on the bottom plate 11a, making it possible to prevent the safety vent 400 from coming into contact with the bottom plate 11a of the housing when swelling occurs due to an increase in the internal pressure of the cell case 200.

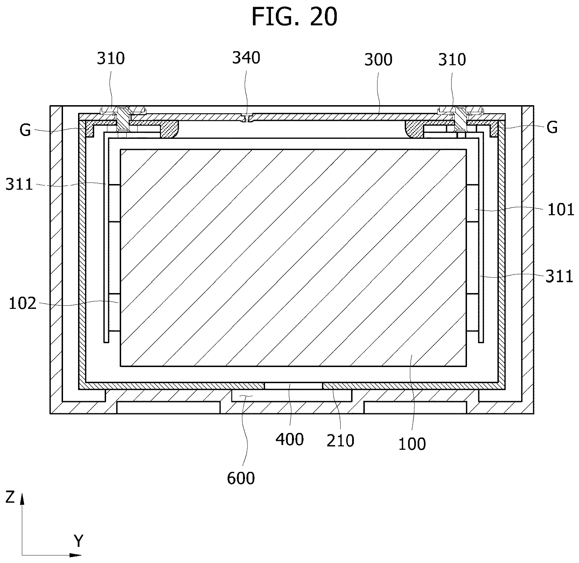

FIG. 20 is a cross-sectional view schematically illustrating a modified example of the battery pack according to the fourth embodiment of the present disclosure.

Referring to FIG. 20, the cell case 200 may be arranged inside the housing 10 in the first direction, and the spacer 600 may be formed as a spacing groove that is formed in the first direction on the bottom plate 11a and formed to face the safety vent 400.

Although the spacer 600 according to the present embodiment is illustrated as the support rib or the spacing groove extending from the bottom plate 11a of the housing 10 in the first direction, the spacer 600 may be designed in various ways as long as the spacer 600 can support the cell case 200 at a certain height.

The present disclosure is directed to providing a secondary battery and a battery pack capable of preventing defects of the secondary battery itself from occurring due to swelling under a high-temperature exposure environment.

As described above, it is possible to prevent defects from occurring by preventing contact with the bottom plate due to swelling under a high-temperature exposure environment of the secondary battery, and it is possible to prevent defects such as buckling, stress concentration, and wrinkles from occurring due to a change in the materials by increasing the area of the welded portion of the safety vent and the bottom portion.

According to the present disclosure, it is possible to prevent defects from occurring due to swelling through the spacer provided on the bottom plate of the housing and a structure of the safety vent.

However, the effects obtainable through the present disclosure are not limited to the above effects, and other technical effects that are not mentioned will be clearly understood by those skilled in the art from the following description of the present disclosure.

While the present disclosure has been described with reference to embodiments shown in the drawings, these embodiments are merely illustrative and it should be understood that various modifications and equivalent other embodiments can be derived by those skilled in the art on the basis of the embodiments.

Therefore, the technical scope of the present disclosure should be defined by the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A secondary battery, comprising:
a cell case including an electrode assembly;
a vent hole in the cell case; and
a safety vent coupled to the vent hole, the safety vent configured to rupture when internal pressure of the cell case is higher than a reference pressure, wherein:
the vent hole is in a bottom portion of the cell case, and
the safety vent does not contact a bottom plate of the cell case when swelling occurs due to an increase in the internal pressure of the cell case.

2. The secondary battery as claimed in claim 1, wherein the safety vent is spaced from an outer surface of the cell case in a direction oriented inward from the outer surface of the cell case.

3. The secondary battery as claimed in claim 1 or claim 2, wherein a plurality of notches are in the safety vent.

4. The secondary battery as claimed in claim 3, wherein the plurality of notches become narrower from a bottom to a top of the safety vent.

5. The secondary battery as claimed in any preceding claim, wherein the safety vent is welded to an inner surface of the vent hole.

6. The secondary battery as claimed in any preceding claim, wherein a step portion supporting a lower surface of the safety vent is in the vent hole.

7. The secondary battery as claimed in any preceding claim, wherein:
a thickness of the safety vent equals a thickness of the bottom portion, and
the safety vent includes a notch groove portion spaced apart from the bottom plate.

8. The secondary battery as claimed in claim 7, wherein the notch groove portion includes:
a plurality of notches configured to rupture due to the internal pressure of the cell case; and
a buffer portion that spaces the plurality of notches apart from the bottom plate.

9. The secondary battery as claimed in claim 8, wherein the plurality of notches narrow from a bottom to a top of the safety vent and have symmetrical shapes.

10. The secondary battery as claimed in claim 8, wherein the plurality of notches narrow from the bottom to the top of the safety vent and have asymmetrical shapes.

11. The secondary battery as claimed in any preceding claim, wherein:
a thickness of the safety vent is larger than a thickness of the bottom portion, and
the safety vent includes a notch groove portion spaced apart from the bottom plate.

12. The secondary battery as claimed in claim 11, wherein:
the notch groove portion includes a plurality of notches configured to rupture due to the internal pressure of the cell case and a buffer portion maintains the plurality of notches spaced apart from the bottom plate, and
the buffer portion is positioned higher than a thickness of the cell case.

13. The secondary battery as claimed in any preceding claim, wherein:
a thickness of the safety vent equals a thickness of the bottom portion, and
the cell case includes a support portion that maintains the safety vent spaced apart from the bottom plate; and, optionally, wherein the support portion is a support rib on a bottom surface of the cell case.

14. A battery pack, comprising:
a housing; and
a plurality of secondary batteries in the housing,
wherein:
each secondary battery is a secondary battery as claimed in any preceding claim.

15. The battery pack according to claim 14, wherein:
the bottom plate of each of said plurality of secondary batteries includes a spacer configured to space the cell case of the respective secondary battery apart from the bottom plate; and, optionally,
(a) the cell case of each of said plurality of secondary batteries is inside the housing in a first direction, and the respective spacer is a support rib on the respective bottom plate, the support rib extending in the first direction;
or
(b) the cell case of each of said plurality of secondary batteries is inside the housing in a first direction, and the respective spacer is a spacing groove on the respective bottom plate in the first direction, the spacing groove corresponding to the safety vent.
